# EUROPÄISCHE PATENTSCHRIFT

(11) **EP 0 537 467 B1**
(45) Veröffentlichungstag und Bekanntmachung des Hinweises auf die Patenterteilung: **23.10.1996**
(21) Anmeldenummer: 92115056.1
(22) Anmeldetag: 03.09.1992
(51) Int. Cl.: B01J 13/16

(54) **Mikrokapseln aus Isocyanaten mit polyethylenoxidhaltigen Gruppen**
Microcapsules from isocyanates containing polyethylenoxid groups
Microcapsules à partir d'isocyanates avec des groupes contenant des oxydes de polyéthylène

(30) Priorität: 16.09.1991 DE 4130743
(43) Veröffentlichungstag der Anmeldung: 21.04.1993
(73) Patentinhaber: BAYER AG, 51368 Leverkusen (DE)
(72) Erfinder: Träubel, Harro, Dr., W-5090 Leverkusen 1 (DE); Weisser, Jürgen, Dr., W-4047 Dormagen 11 (DE); Reiff, Helmut, Dr., W-5090 Leverkusen 1 (DE)

(56) Entgegenhaltungen:
- DE-A- 2 251 381
- DE-A- 2 341 113
- FR-A- 2 220 304
- FR-A- 2 412 346
- US-A- 4 076 774

## Beschreibung

Die vorliegende Erfindung betrifft Mikrokapseln erhalten nach dem Grenzflächenadditionsverfahren unter Einsatz von Isocyanaten mit polyethylenoxidhaltigen Gruppen.

Es ist bekannt Mikrokapseln, z.B. für kohlefreie Durchschreibepapiere, mit Hilfe eines Grenzflächenadditionsverfahrens herzustellen. Dabei wird ein als Leukoverbindung vorliegender Farbstoff und ein mindestens bifunktionelles Isocyanat in einer hydrophoben Flüssigkeit gelöst, dieses hydrophobe Gemisch in Wasser emulgiert, das im allgemeinen einen Stabilisator, d.h. ein als Schutzkolloid wirkendes Mittel (z.B. teilverseiftes Polyvinylacetat) und häufig einen Emulgator, d.h. ein die Oberflächenspannung herabsetzendes Mittel, enthält und dann ein mit dem Isocyanat reaktionsfähiges Polyamin zugegeben. An den Grenzflächen der emulgierten hydrophoben Tröpfchen findet dann eine Polyadditionsreaktion statt, bei der sich um die hydrophoben Tröpfchen eine Polyurethanharnstoff-Wand bildet. Abschließend muß häufig eine aufwendige Nachbehandlung bei erhöhter Temperatur durchgeführt werden. Derartige Verfahren sind beispielsweise beschrieben in der DE-OS 3 202 551, EP-OS 0 050 264 und US-PS 4 193 889.

Zur Erzielung möglichst kleiner Kapseln ist dabei eine aufwendige Emulgiertechnik erforderlich, z.B. hochtourige, energieintensive Rührsysteme. Kapseln mit mittleren Durchmessern unter 5 µm sind bisher nur extrem schwierig herzustellen.

Aus der DE-OS 3 635 821 sind Mikrokapseln bekannt, bei deren Herstellung ein aromatisches Isocyanat mit wenigstens 2 Isocyanatgruppen und einer Alkyl- oder Alkoxygruppe mit wenigstens 6 C-Atomen verwendet wurde. Auch solche Mikrokapseln erfordern bei ihrer Herstellung eine aufwendige Emulgiertechnik und eine aufwendige Nachbehandlung bei erhöhter Temperatur.

Aufgabe der vorliegenden Erfindung ist es, Mikrokapseln zur Verfügung zu stellen, bei deren Herstellung auch kleine Kapseln mit geringem Emulgieraufwand erhalten werden können.

Aus der US-PS 4 076 774 sind doppelwandige Mikrokapseln bekannt, wobei die innere Wand aus einem Isocyanat und einem Polyol und die äußere Wand aus einem Isocyanat und beispielsweise einem Polyamin entsteht. Das Polyol dient dabei als polyfunktioneller Vernetzer und nicht zur Modifizierung des Isocyanats.

Die FR-OS 2 220 304 beschreibt bei der Herstellung von Mikrokapseln den Einsatz von Isocyanaten in Form sog. Präpolymerer, d.h. Umsetzunsprodukten von Isocyanaten mit kleinen Menen von Polyolen. Ähnliches beschreibt die FR-OS 2 412 346, allerdings in Kombination mit einem Zusatz von Alkyl- und/oder Alkoxyacetat.

Es wurden nun Mikrokapseln gefunden, die dadurch gekennzeichnet sind, daß bei ihrer Herstellung als Isocyanate Umsetzungsprodukte von mindestens 2-funktionellen Isocyanaten mit einwertigen Polyethylenoxidalkoholen zum Einsatz gelangen. Bevorzugte erfindungsgemäß einzusetzende Isocyanate sind Umsetzungsprodukte von 3- oder höher-funktionellen Isocyanaten mit einwertigen Polyethylenoxidalkoholen, bei denen der Polyethylenoxidalkohol-Rest über eine Urethangruppe gebunden ist.

Es wurde auch ein Verfahren zur Herstellung von Mikrokapseln gefunden, bei dem das einzukapselnde Material und ein Polyisocyanat in einem hydrophoben Lösungsmittel gelöst, dieses hydrophobe Gemisch in Wasser kontinuierlich oder diskontinuierlich emulgiert und dann ein mit dem Isocyanat reaktionsfähiges Polyamin zugegeben wird, das dadurch gekennzeichnet ist, daß als Polyisocyanat ausschließlich oder teilweise Umsetzungsprodukte von 2- oder höher-funktionellen Isocyanaten mit einwertigen Polyethylenoxidalkoholen eingesetzt werden.

Erfindungsgemäß einzusetzende Polyisocyanate kann man beispielsweise erhalten, indem man aliphatische, cycloaliphatische und/oder aromatische, vorzugsweise aliphatische und/oder cycloaliphatische, mindestens 2-funktionelle, bevorzugt 3- oder höher-funktionelle Isocyanate mit einem einwertigen Polyethylenoxidalkohol umsetzt.

Als Isocyanate für eine solche Umsetzung kommen beispielsweise in Betracht:
a) Triisocyanato(cyclo)alkyl-isocyanurate der Formel 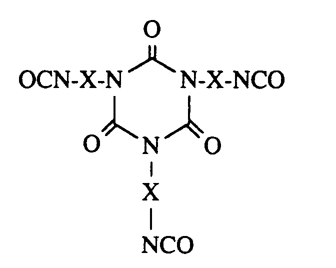 in der
   - X: gleiche oder verschiedene Alkylen- oder Cycloalkylen-Reste bedeuten
   und deren Gemische mit höheren, mehr als einen Isocyanuratring aufweisenden Homologen. Solche Isocyanurate können z.B. einen NCO-Gehalt von 10 bis 30 Gew.-% und eine mittlere NCO-Funktionalität von 3 bis 3,5 aufweisen.
b) Biuretgruppen aufweisende Polyisocyanate mit aliphatisch gebundenen Isocyanatgruppen, insbesondere Tris-(6-isocyanatohexyl)-biuret und Tris-isocyanato-isophoronyl-biuret und deren Gemische mit höheren Homologen. Solche Isocyanate können z.B. einen NCO-Gehalt von 18 bis 22 Gew.-% und eine mittlere NCO-Funktionalität von 3 bis 3,5 aufweisen.
c) Urethan- und/oder Allophanatgruppen aufweisende Polyisocyanurate mit aliphatisch oder cycloaliphatisch gebundenen Isocyanatgruppen, wie sie beispielsweise durch Umsetzung überschüssiger Mengen an Hexamethylendiisocyanat mit mehrwertigen Alkoholen erhalten werden können. Solche Isocyanate können z.B. einen NCO-Gehalt von 12 bis 20 Gew.-% und eine mittlere NCO-Funktionalität von 3 aufweisen.
d) Bis(isocyanatohexyl)oxadiazin-trion.

Wenn man ein Umsetzungsprodukt des Isocyanates d) mit einem einwertigen Polyethylenoxidalkohol zur Mikroverkapselung einsetzt, so kann das Polyamin zur Kapselwandbildung mit freien NCO-Gruppen und/oder unter CO₂-Abspaltung mit dem Oxadiazin-trion-Ring, der ein verkapptes Isocyanat ist, reagieren.

Als einwertige Polyethylenoxidalkohole für die Umsetzung mit den mindestens 2-funktionellen Isocyanaten kommen z.B. beliebige Ethoxylierungsprodukte von einwertigen niedermolekularen, aktive H-Atome enthaltenden Stoffen in Frage, beispielsweise Ethoxylierungsprodukte von einwertigen Alkoholen oder von einwertigen Aminen, insbesondere Ethoxylierungsprodukte von Methanol, n-Butanol, Cyclohexanol, 3-Methyl-3-hydroxymethyloxetan und/oder Phenol.

Die einwertigen Polyethylenoxidalkohole enthalten vorzugsweise mindestens eine Polyetherkette mit mindestens 6, beispielsweise 6 bis 70, vorzugsweise 15 bis 60 Ethylenoxideinheiten. Die Polyetherkette ist dabei vorzugsweise nur aus Ethylenoxideinheiten aufgebaut, sie kann gegebenenfalls auch andere Alkylenoxideinheiten mit enthalten, beispielsweise bis zu 40 Gew.-% Propylenoxideinheiten (bezogen auf alle vorhandenen Alkylenoxideinheiten).

Mindestens 2-, besser jedoch 3- oder höher-funktionelle Isocyanate können mit einwertigen Polyethylenoxidalkoholen in solchen Mengenverhältnissen zur Reaktion gebracht werden, daß ein Umsetzungsprodukt (= Polyisocyanat) entsteht, das im Mittel noch mindestens 1,8 NCO-Gruppen pro Molekül aufweist. Diese Reaktion verläuft im allgemeinen bei erhöhter Temperatur besonders gut, z.B. bei 50 bis 130°C.

Zur diskontinuierlichen Herstellung erfindungsgemäßer Mikrokapseln kann man solche Polyisocyanate einsetzen, die beispielsweise 0,1 bis 100 Gew.-% der Umsetzungsprodukte von mindestens 2-funktionellen Isocyanaten mit einwertigen Polyethylenoxidalkoholen enthalten. Vorzugsweise beträgt diese Menge 0,5 bis 100 Gew.-%, besonders bevorzugt 5 bis 50 Gew.-%. Zur kontinuierlichen Herstellung erfindungsgemäßer Mikrokapseln kann man beispielsweise 0,1 bis 20 Gew.-%, vorzugsweise 0,3 bis 10 Gew.-%, besonders bevorzugt 0,7 bis 7,5 Gew.-% Umsetzungsprodukte von mindestens 2-funktionellen Isocyanaten mit einwertigen Polyethylenoxidalkoholen enthaltende Polyisocyanate einsetzen. Wenn man Polyisocyanat enthaltend weniger als 100 Gew.-% Umsetzungsprodukte von mindestens 2-funktionellen Isocyanaten mit einwertigen Polyethylenoxidalkoholen einsetzt, so können andere, mindestens 2-funktionelle Isocyanate im Gemisch mit enthalten sein. Bei solchen anderen Isocyanaten kann es sich z.B. um bei der Herstellung von Mikrokapseln nach dem Grenzflächenadditionsverfahren übliche Isocyanate handeln, etwa um 2- bis 6-funktionelle, vorzugsweise 2- bis 3-funktionelle aliphatische, cycloaliphatische und/oder aromatische, vorzugsweise aliphatische und/oder cycloaliphatische Isocyanate, beispielsweise um Bis- (isocyanatohexyl)-oxadiazin-trion, Tris-(isocyanatohexyl)-biuret oder -isocyanurat, Xylylendiisocyanat, Hexamethylendiisocyanat, Isophorondiisocyanat und Bis-(isocyanatohexyl)-uretdion.

Die anderen für die Kapselherstellung benötigten Komponenten, also das einzukapselnde Material, das hydrophobe Lösungsmittel, die wäßrige Phase und das Polyamin können dem Stand der Technik entsprechen.

Als einzukapselnde Materialen kommen beispielsweise Parfümöle, Pflanzenschutzmittel, Reaktivkleber und Pharmazeutika infrage. Bevorzugt sind jedoch in Leukoform vorliegende Farbstoffe, was dann Mikrokapseln für das Einsatzgebiet kohlefreie Durchschreibepapiere ergibt.

Beispielsweise seien als in Leukoform vorliegende Farbstoffe (= sog. Farbgeber oder colorformer) Triphenylmethanverbindungen, Diphenylmethanverbindungen, Xanthenverbindungen, Benzoxazinverbindungen, Thiazinverbindungen und Spiropyranverbindungen genannt, wobei auch Gemische von Farbstoffen in Leukoform von Interesse sind. Als hydrophobe Lösungsmittel seien genannt: chloriertes Diphenyl, chloriertes Paraffin, Baumwollsamenöl, Erdnußöl, Palmöl, Trikresylphosphat, Silikonöl, Dialkylphthalate, Dialkyladipate, teilhydrierte Terphenyle, alkyliertes Diphenyl, alkyliertes Naphthalin, Diarylether, Arylalkylether und höher alkyliertes Benzol, sowie beliebige Mischungen dieser hydrophoben Lösungsmittel und Mischungen einzelner oder mehrerer dieser hydrophoben Lösungsmittel mit Kerosin, Paraffinen und/oder Isoparaffinen. Als Beispiele für Polyamine seien aliphatische primäre und sekundäre Di- und Polyamine genannt.

Die Mengenverhältnisse der einzelnen Komponenten zur Mikrokapselherstellung können ebenfalls dem Stand der Technik entsprechen. Beispielsweise kann man das jeweilige Polyamin in stöchiometrischem Verhältnis zum Isocyanat einsetzen. Die hydrophobe Phase kann beispielsweise 0,1 bis 10 Gew.-%, vorzugsweise 1 bis 8 Gew.-% einzukapselndes Material, 1 bis 25 Gew.-%, vorzugsweise 4 bis 18 Gew.-%, Polyisocyanate und ergänzend zu 100 Gew.-% hydrophobe Lösungsmittel enthalten. Das Gewichtsverhältnis der hydrophoben Phase zur Wasserphase kann beispielsweise 10:90 bis 60:40, vorzugsweise 30:70 bis 50:50 betragen.

Die wäßrige Phase kann Stabilisatoren, d.h. als Schutzkolloide wirkende Mittel und/oder viskositätserhöhende Mittel erhalten. Beispiele für solche Mittel sind Gelatine, Polyvinylalkohole, teilverseiftes Polyvinylacetat und Carboxymethylcellulose. Solche Mittel können, bezogen auf die wäßrige Phase, beispielsweise in Mengen von 0,05 bis 5 Gew.-% enthalten sein. Im allgemeinen ist es vorteilhaft, die Mikrokapselbildung bei mäßig erhöhter Temperatur zu Ende zu bringen.
Die Herstellung erfindungsgemäßer Mikrokapseln kann in üblichen Dispersionsapparaturen bzw. Emulgierapparaturen erfolgen.

Man erhält dann einen wäßrigen Slurry, der auch als Mikrokapseldispersion bezeichnet wird und das zu verkapselnde Material mit einem Lösungsmittel dafür in mikroverkapselter Form enthält.

Aus einem Slurry, der mikroverkapselte Farbstoffe in Leukoform enthält, kann man zu einem Satz kohlefreien Durchschreibepapiers kommen, wenn man in an sich bekannter Weise den Slurry, gegebenenfalls nach Zusatz eines Bindemittels und/oder sonstiger Hilfsstoffe auf ein Basispapier aufträgt, was ein sogenanntes coated back paper ergibt und dieses auf ein sogenanntes coated front paper auflegt, das mit einer Schicht überzogen ist, die einen Entwickler für den Farbstoff enthält.

Die erfindungsgemäßen Mikrokapseln haben eine Reihe von überraschenden Vorteilen: Sie lassen sich auch in Form von sehr kleinen Kapseln, z.B. Kapseln mit mittleren Durchmessern von 1 bis 10 µm herstellen. Im Emulgierschritt wird wesentlich weniger Energie benötigt als bisher, d.h. zur Herstellung von Mikrokapseln einer bestimmten Größe wird weniger Energie als bisher benötigt oder mit gleicher Energie wie bisher werden kleinere Mikrokapseln erhalten. Emulgatoren werden nicht benötigt, Stabilisatoren können gegebenenfalls auch weggelassen werden. Die Nachbehandlung der Bildung der Mikrokapseln kann gegebenenfalls bei niedrigerer Temperatur und/oder während einer kürzeren Zeit als bisher erfolgen oder in manchen Fällen auch ganz unterbleiben.

Die erfindungsgemäßen Mikrokapseln können nach kontinuierlichen und diskontinuierlichen Verfahren hergestellt werden, einschließlich der dazu benötigten Emulsion, die aus einer öligen Phase, enthaltend das erfindungsgemäß einzusetzende Polyisocyanat, und einer wäßrigen Phase besteht.

Bei kontinuierlicher und diskontinuierlicher Herstellung der Emulsion ist durch das erfindungsgemäß einzusetzende Polyisocyanat der erforderliche Energieaufwand deutlich reduziert. Das bedeutet u.a. auch, daß erfindungsgemäß bei der kontinuierlichen Herstellung der Emulsion bei konstanter oder sogar reduzierter Energiezufuhr der Durchsatz pro Zeiteinheit erheblich gesteigert werden kann, ohne daß dadurch die Größe der hergestellten Mikrokapseln zunimmt.

### Beispiele

Bei den Beispielen 1 bis 10, 13, 15, 16 und 17 wurde jeweils die gleiche handelsübliche Emulgiervorrichtung eingesetzt. Die bei diesen Beispielen angegebenen Umdrehungszahlen entsprechen deshalb direkt dem relativen Energieaufwand.

Die Größe der hydrophoben Tröpfchen in der Emulsion und die Größe der Mikrokapseln in der fertigen Mikrokapseldispersion sind praktisch identisch.

### Beispiel 1 (Vergleichsbeispiel)

45,1 g Bis-isocyanatohexyl-oxadiazin-trion wurden in 364,9 g einer Farbgeberlösung bestehend aus 350,3 g Lösungsmittelgemisch (60 Gew.-% chlorierter Kohlenwasserstoff, 40 Gew.-% aliphatischer Kohlenwasserstoff) und 14,6 g eines üblichen Farbgebers (Leukoform eines Benzoxazinfarbstoffes) gelöst. Diese Lösung wurde bei 30°C so in 506,4 g einer wäßrigen, 1 Gew.-% Polyvinylalkohollösung emulgiert, daß eine Emulsion mit Tröpfchen einer mittleren Teilchengröße von 6,5 µm entstand. Hierzu war Rühren mit 10 000 U/min erforderlich. Bei Raumtemperatur wurden dann 83,6 g einer Diethylentriaminlösung zugefügt. Die Aminlösung war so konzentriert, daß die damit eingebrachten Amin-Äquivalente genau den mit dem Bis-isocyanatohexyl-oxadiazin-trion eingebrachten NCO-Äquivalenten entsprachen.

Nach 2 Stunden wurde die Temperatur unter Rühren allmählich auf 30°C, nach einer weiteren Stunde auf 35°C und schließlich für 4 Stunden auf 60°C gebracht. Danach war die Harnstoffbildung abgeschlossen und nach 10-stündigem Rühren ließ sich kein freies Isocyanat mehr nachweisen.

Es war eine 41 gew.-%ige Mikrokapseldispersion entstanden, die in herkömmlicher Weise auf Papier aufgestrichen werden kann.

### Beispiel 2 (Vergleichsbeispiel)

60 g Bis-isocyanatohexyl-oxadiazin-trion wurden in 340 g einer Farbgeberlösung gelöst. Letztere bestand aus einer 4 gew.-%igen Lösung eines schwarz entwickelnden Leuko-Benzoxazinfarbstoffes in Diisopropylnaphthalin. Diese Lösung wurde bei 10 000U/min und 30°C in 488,5 g einer wäßrigen, 1 gew.-%igen Polyvinylalkohollösung emulgiert, wobei Tröpfchen einer mittleren Teilchengröße von 7,5 µm entstanden. Die Grenzflächenaddition erfolgte durch Zugabe von 111,5 g einer 9 gew.-%igen, wäßrigen Diethylentriaminlösung. Anschließend wurde wie in Beispiel 1 beschrieben, nachbehandelt.

### Beispiel 3

a) 1 000 g eines Gemisches aus dimerem und trimerem 1,6-Diisocyanatohexan, welches im wesentlichen aus einem Gemisch aus Bis-(6-isocyanatohexyl)-uretdion und Tris-(6-isocyanatohexyl)-isocyanurat bestand und bei 23°C eine Viskosität von 150 mPa·s, einen NCO-Gehalt 21,6 Gew.-% und eine mittlere NCO-Funktionalität von 2,6 aufwies, wurden bei 110°C im Verlauf von 2,5 Stunden zur Reaktion gebracht mit 80,8 g eines auf 3-Ethyl-3-hydroxymethyl-oxetan gestarteten monofunktionellen Polyethylenoxidalkohols vom Molekulargewicht 1 210. Das Reaktionsprodukt wies einen NCO-Gehalt von 19,2 Gew.-% auf.
b) 60 g dieses Reaktionsproduktes wurden in 340 g der auch in Beispiel 2 verwendeten Farbgeberlösung aufgelöst und bei 10 000 U/min in 493,4 g einer 1 gew.-%igen wäßrigen Polyvinylalkohollösung emulgiert. Die Emulsion wurde mit 105 g einer 9 gew.-%igen wäßrigen Diethylentriaminlösung versetzt und wie in Beispiel 1 beschrieben, nachbehandelt.
c) Es resultierte eine außerordentlich feinteilige, 40 gew.-%ige Mikrokapseldispersion aus Kapseln einer mittleren Größe von 1,7 µm. Die Mikrokapseldispersion kann in herkömmlicher Weise auf Papier aufgestrichen werden.

### Beispiel 4

Beispiel 3 wurde wiederholt, jedoch wurde der Emulgierapparat nur mit der halben Leistung, also mit 5 000 U/min betrieben. Es resultierte eine 40 gew.-%ige Mikrokapseldispersion, in der die Kapseln eine mittlere Größe von 4 µm aufwiesen.

### Beispiel 5

Beispiel 3 wurde wiederholt, jedoch wurde bei sonst unveränderten Bedingungen statt der Polyvinylalkohollösung lediglich eine entsprechende Menge Wasser eingesetzt. Es resultierte eine stabile Mikrokapseldispersion, in der die Kapseln eine mittlere Größe von 2,7 µm aufwiesen. Sie kann in herkömmlicher Weise zu einem coated back-Durchschreibepapier verarbeitet werden.

### Beispiel 6

Beispiel 5 wurde wiederholt, jedoch wurde nach der Aminzugabe nur 30 Minuten lang bei 40°C nachgerührt. Es resultierte eine Kapseldispersion, in der die Kapseln eine mittlere Größe von 2,8 µm aufwiesen. Die Kapselwände erwiesen sich als dicht. Die Dispersion kann in herkömmlicher Weise zu einem coated-back-Durchschreibepapier verarbeitet werden.

### Beispiel 7

60 g eines Isocyanates erhalten durch Umsetzung von 1 000 g eines Biuretpolyisocyanates auf der Basis von 1,6-Diisocyanatohexan (bestehend im wesentlichen aus N,N',N''-Tris-(6-isocyanatohexyl)-biuret und dessen höheren Homologen; NCO-Gehalt 21,0 Gew.-%; mittlere NCO-Funktionalität 2,6) mit 80,8 g des gleichen Polyethylenoxidalkohols wie in Beispiel 3 bei 110°C für 2 Stunden wurden in 340 g einer Farbgeberlösung bestehend aus 326,4 g Lösungsmittel (Gemisch aus 70 Gew.-% Diisopropylnaphthalin und 30 Gew.-% Paraffinen) und 13,6 g des auch in Beispiel 1 eingesetzten Farbgebers gelöst. Diese Lösung wurde so in 494 g Wasser emulgiert, daß eine Emulsion mit Tröpfchen einer mittleren Teilchengröße von 2,3 µm entstand. Hierzu war Rühren mit 10 000 U/min erforderlich. Die Umsetzung mit Amin erfolgte in gleicher Weise wie in Beispiel 3. Zur Nachbehandlung wurde 30 min bei 40°C gerührt. Dann hatte sich eine 40 gew.-%ige Mikrokapseldispersion gebildet, die in herkömmlicher Weise auf Papier aufgestrichen werden kann.

### Beispiel 8

1 428 g einer 70 gew.-%igen Lösung eines Isocyanato-isocyanurats mit einer mittleren NCO-Funktionalität von 3,3 erhalten durch Trimerisierung von Isophorondiisocyanat in einem aromatischen Lösungsmittelgemisch (NCO-Gehalt der Lösung 11 Gew.-%) wurden bei 110°C und 2,5 h lang mit 80,8 g eines Polyethylenoxidalkohols (gestartet auf n-Butanol, Molekulargewicht 1 145) umgesetzt. 83,8 g der erhaltenen Lösung (Lösungsmittelanteil 23,8 g) wurden in 316,2 g einer 4,3 gew.-%igen Lösung des auch in Beispiel 1 eingesetzten Leuko-Benzoxazin-Farbstoffs in einem Gemisch aus 70 Gew.-% Diisopropylnaphthalin und 30 Gew.-% Isoparaffin aufgelöst und bei 10 000 U/min in 526 g Wasser emulgiert. Die mittlere Tröpfchengröße betrug dann 2,1 µ. Nach Zugabe von 73,5 g einer 9 gew.-%igen Diethylentriaminlösung und 30 minütigem Rühren bei 40°C wurde eine stabile 40 gew.-%ige Kapseldispersion erhalten, die in herkömmlicher Weise zu einem coated-back-Durchschreibepapier verarbeitet werden kann.

### Beispiel 9

60 g eines Isocyanatgemisches bestehend aus 85 Gew.-% des in Beispiel 3 näher beschriebenen Umsetzungsproduktes aus di- und trimerem 1,6-Diisocyanatohexan und einem Polyethylenoxidalkohol und 15 Gew.-% Xylylendiisocyanat (Isomerengemisch, NCO-Gehalt 40 Gew.-%) wurden in 340 g der auch in Beispiel 1 verwendeten Farbgeberlösung gelöst und bei 4 000 U/min in 479 g Wasser emulgiert. Nach Zugabe von 121 g einer 9 gew.-%igen wäßrigen Diethylentriaminlösung und 30 minütigem Rühren bei 30°C resultierte ein 40 gew.-%ige Kapseldispersion, die Kapseln einer mittleren Größe von 8,5 µm enthielt. Diese Dispersion kann in herkömmlicher Weise zu einem coated-back-Durchschreibepapier verarbeitet werden.

### Beispiel 10

Ein Gemisch aus 30 g des in Beispiel 3 näher beschriebenen Umsetzungsprodukts aus di- und trimeren 1,6-Diisocyanato-hexan und einem Polyethylenoxidalkohol und 30 g eines Biuretgruppen enthaltenden Oligomers des Hexamethylendiisocyanates (NCO-Gehalt 23,4 Gew.-%) wurde mit 340 g einer Lösung bestehend aus 6 Gew.-% γ-Hexachlorcyclohexan (Lindan) und 94 Gew.-% technischem Chlorparaffin vermischt. Die Lösung wurde in ein Gefäß überführt, in dem sich 600 ml Wasser befanden und dort bei 25°C mittels eines schnellaufenden Rührers bei 1 000 U/min zu einer Emulsion verarbeitet. Dann wurden während 30 Minuten und weiterem, jedoch langsamerem Rühren 152 g einer 5 gew.-%igen, wäßrigen Ethylendiaminlösung zugefügt und danach noch weitere 2 h bei 40°C gerührt.

Es resultierte eine 35 gew.-%ige Mikrokapseldispersion mit Kapseln einer mittleren Größe von 40 µm. Diese Dispersion eignet sich für slow-release-Formulierungen des Insektizides Lindan.

### Beispiele 11 - 16

Folgende Isocyanate kamen jeweils als Gemisch (eine Komponente aus der Gruppe 1 bis 3, eine Komponente aus der Gruppe 4 bis 6) zum Einsatz:
- Isocyanat 1:: Bis-isocyanatohexyl-oxa-diazin-trion
- Isocyanat 2:: Tris-isocyanatohexyl-biuret
- Isocyanat 3:: Tris-isocyanatohexyl-isocyanurat
- Isocyanat 4:: Umsetzungsprodukt aus einem Polyisocyanat mit einem Polyether wie in Beispiel 6 der EP-A2 02 06 059 im Detail beschrieben.
- Isocyanat 5:: Hydrophiliertes Tris-isocyanato-hexyl-isocyanurat wie in Beispiel 9 der EP-A2 02 06 059 im Detail beschrieben.
- Isocyanat 6:: Lösungsmittelhaltiges Umsetzungsprodukt aus trimerisiertem Isophorondiisocyanat mit einem Polyethylenoxidalkohol wie in Beispiel 12 der EP-A2 02 06 059 im Detail beschrieben.

Folgende Farbgeber kamen zum Einsatz:
- Farbgeber 1:: schwarz entwickelnder Leukofarbstoff vom Benzoxazintyp
- Farbgeber 2:: Kristallviolettlacton

Folgende hydrophobe Lösungsmittel kamen zum Einsatz:
- Lösungsmittel 1:: KMC®
- Lösungsmittel 2:: Exxsol® D 100 S

Jeweils 60 g Isocyanatgemisch wurden in jeweils 340 g Farbgeberlösung gelöst und diese Lösung in 600-x Gramm einer wäßrigen Phase emulgiert. Der Emulsion wurden x Gramm einer 9 gew.-%igen wäßrigen Diethylentriaminlösung zugefügt, wobei x jeweils so gewählt wurde, daß das Verhältnis der eingebrachten NCO-Gruppen zu den eingebrachten Amingruppen exakt stöchiometrisch war.

Die erhaltenen Kapseldispersionen wurden sämtlich 30 Minuten bei 40°C nachgerührt.

Einzelheiten und die Größe der Kapseln in der jeweils erhaltenen Mikrokapseldispersion sind aus der folgenden Tabelle 1 ersichtlich:

**Tabelle 1**

| Beispiel Nr. | eingesetzte Isocyanate | | Farbgeberlösung | Wasserphase | Rührleistung (U/min) | mittlerer Kapseldurchmesser (µm) |
|---|---|---|---|---|---|---|
| | Typen | Gew.-Verhältnis | | | | |
| 11 | 1 und 4 | 1:1 | 4,0 Gew.-% Farbgeber 1 | nur Wasser | 1000*⁾ | 50 |
| | | | 57,6 Gew.-% Lösungsmittel 1 | | | |
| | | | 38,4 Gew.-% Lösungsmittel 2 | | | |
| 12 | 3 und 5 | 1:1 | 4,0 Gew.-% Farbgeber 1 | nur Wasser | 8000 | 5,5 |
| | | | 96,0 Gew.-% Lösungsmittel 1 | | | |
| 13 | 2 und 4 | 95:5 | 5,0 Gew.-% Farbgeber 2 | 1 Gew.-%ige | 1000*⁾ | 73 |
| | | | 95,0 Gew.-% Lösungsmittel 1 | wässrige PVA-Lösung | | |
| 14 | 2 und 4 | 95:5 | 5,0 Gew.-% Farbgeber 2 | 1 Gew.-%ige | 10000 | 3,2 |
| | | | 95,0 Gew.-% Lösungsmittel 1 | wässrige PVA-Lösung | | |
| 15 | 2 und 4 | 1:1 | 5,0 Gew.-% Farbgeber 2 | nur Wasser | 10000 | 1,7 |
| | | | 95,0 Gew.-% Lösungsmittel 1 | | | |
| 16 | 1 und 6 | 9:1 | 5,0 Gew.-% Farbgeber 2 | 1 Gew.-%ige | 10000 | 3 |
| | | | 95,0 Gew.-% Lösungsmittel 1 | wässrige PVA-Lösung | | |

| | | | | | | |
|---|---|---|---|---|---|---|
| *⁾Laborrührer | | | | | | |

### Beispiele 17 bis 20

### (Beispiele 17 und 18 sind zum Vergleich, Beispiele 19 und 20 erfindungsgemäß)

Diese Beispiele betreffen die kontinuierliche Herstellung einer Öl-in-Wasser-Emulsion aus der sich eine Mikrokapseldispersion herstellen läßt.

### Eingesetzte Polyisocyanate:

Bei Beispielen 17 und 18:
Bis-(isocyanatohexyl)-oxadiazintrion

Bei Beispielen 19 und 20:
Ein Gemisch aus 1 Gew.-% des Polyisocyanats, hergestellt gemäß Beispiel 3a) und 99 Gew.-% Bis-(isocyanatohexyl)-oxadiazintrion.

### Eingesetzte Farbgeberlösung:

3,6 Gew.-% Kristallviolettlacton, gelöst in einer Mischung aus
50 Gew.-Teilen Chlorparaffin (Type: Meflex® DA 029) und
50 Gew.-Teilen Dodecylbenzol (Type: Marlikan®).

### Eingesetzte Polyvinylalkohol-Lösung:

1 Gew.-% teilverseiftes Polyvinylacetat (Type: Airvol® 523), gelöst in deionisiertem Wasser.

### Eingesetzte Aminlösung:

9 Gew.-% Diethylentriamin in deionisiertem Wasser.

Die Farbgeberlösung, das Polyisocyanat und die Polyvinylalkohol-Lösung wurden einer kontinuierlich arbeitenden Emulgiervorrichtung zugeführt. Einzelheiten der Emulgierung und die Ergebnisse sind aus Tabelle 2 ersichtlich. Die Aminlösung wurde der gebildeten Emulsion nach Verlassen der Emulgiervorrichtung zugefügt. Sie ist hier nur angegeben, um die gesamten Einsatzprodukte zur Kapselherstellung zu erfassen.

**Tabelle 2**

| | Beispiele | | | |
|---|---|---|---|---|
| | 17 | 18 | 19 | 20 |
| | zum Vergleich | | erfindungsgemäß | |
| Farbgeberlösung (kg/h) | 360 | 500 | 500 | 500 |
| Polyisocyanat (kg/h) | 40 | 55,5 | 55,5 | 55,5 |
| Polyvinylalkohol-Lsg. (kg/h) | 525,6 | 729,9 | 729,9 | 729,9 |
| Aminlösung (kg/h) | 74,4 | 103,3 | 103,3 | 103,3 |
| Drehzahl der Emulgiermaschine (U/min) | 3245 | 3245 | 3245 | 2910 |
| Emulgiertemperatur (°C) | 30 | 30 | 30 | 30 |
| Gesamtdurchsatz (kg/h) | 1000 | 1388,7 | 1388,7 | 1388,7 |
| mittlere Teilchengröße (µm) | 6,8 | 7,6 | 5,7 | 6,0 |

Aus den Beispielen 17 bis 20 geht folgendes hervor:
- Bei einer Drehzahl der Emulgiermaschine von 3245 U/min und einem Gesamtdurchsatz von 1000 kg/h lassen sich mit einem üblichen Polyisocyanat Teilchen einer Größe von 6,8 µm herstellen (Beispiel 17).
- Erhöht man bei sonst unveränderten Bedingungen den Gesamtdurchsatz auf 1388,7 kg/h, so steigt die Größe der hergestellten Teilchen von 6,8 auf 7,6 µm (Beispiel 18).
- Setzt man statt üblichem Polyisocyanat eine Mischung ein, die erfindungsgemäß einzusetzendes Polyisocyanat enthält, so geht bei erhöhtem Gesamtdurchsatz die Größe der hergestellten Teilchen von 7,6 auf 5,7 µm zurück (Beispiel 19).
- Reduziert man bei sonst unveränderten Bedingungen die Energiezufuhr in die Emulgiermaschine (rund 10 % weniger U/min), so steigt die Größe der hergestellten Teilchen zwar auf 6 µm an (Beispiel 20), liegt aber immer noch deutlich niedriger als bei nicht erfindungsgemäßem Arbeiten.
- Man kann durch den Einsatz erfindungsgemäß zu verwendender Polyisocyanate also bis zu 3 Parameter günstig beeinflussen, nämlich die benötigte Emulgiermenge, den Durchsatz und die Teilchengröße.

## Patentansprüche

1. Mikrokapseln mit Polyharnstoffwand, dadurch gekennzeichnet, daß bei ihrer Herstellung als Isocyanate Umsetzungsprodukte von mindestens 2-funktionellen Isocyanaten mit einwertigen Polyethylenoxidalkoholen zum Einsatz gelangen.

2. Mikrokapseln nach Anspruch 1, dadurch gekennzeichnet, daß bei ihrer Herstellung als Isocyanate Umsetzungsprodukte von 3- oder höher-funktionellen Isocyanaten mit einwertigen Polyethylenoxidalkoholen, bei denen der Polyethylenoxidalkohol-Rest über eine Urethangruppe gebunden ist, zum Einsatz gelangen.

3. Verfahren zur Herstellung von Mikrokapseln, bei dem das einzukapselnde Material und ein Polyisocyanat in einem hydrophoben Lösungsmittel gelöst, dieses hydrophobe Gemisch in Wasser kontinuierlich oder diskontinuierlich emulgiert und dann ein mit dem Isocyanat reaktionsfähiges Polyamin zugegeben wird, dadurch gekennzeichnet, daß als Polyisocyanat ausschließlich oder teilweise Umsetzungsprodukte von 2- oder höher-funktionellen Isocyanaten mit einwertigen Polyethylenoxidalkoholen eingesetzt werden.

4. Verfahren nach Anspruch 3, dadurch gekennzeichnet, daß man ein Polyisocyanat einsetzt, das erhalten worden ist durch Umsetzung
a) eines Triisocyanato(cyclo)alkyl-isocyanurats der Formel 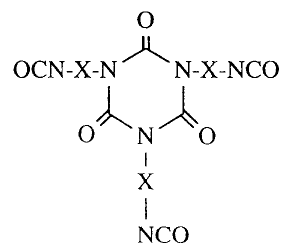 in der
X gleiche oder verschiedene Alkylen- oder Cycloalkylen-Reste bedeuten, gegebenenfalls Gemische davon mit höheren Homologen, oder
b) von Biuretgruppen aufweisende Polyisocyanaten mit aliphatisch gebundenen Isocyanatgruppen, gegebenenfalls im Gemisch mit höheren Homologen, oder
c) von Urethan- und/oder Allophanatgruppen aufweisende Polyisocyanuraten mit aliphatisch oder cycloaliphatisch gebundenen Isocyanatgruppen und/oder
d) Bis-isocyanato-hexyl-oxadiazin-trion
mit Ethoxylierungsprodukten von einwertigen niedermolekularen, aktive H-Atome enthaltenden Stoffen.

5. Verfahren nach Ansprüchen 3 und 4, dadurch gekennzeichnet, daß die einwertigen Polyethylenoxidalkohole eine Polyetherkette mit mindestens 6 Ethylenoxideinheiten enthalten.

6. Verfahren nach Ansprüchen 3 bis 5, dadurch gekennzeichnet, daß man bei diskontinuierlicher Arbeitsweise Polyisocyanate einsetzt, die 0,1 bis 100 Gew.-% der Umsetzungsprodukte von mindestens 2-funktionellen Isocyanaten mit einwertigen Polyethylenalkoholen und gegebenenfalls für die Herstellung von Mikrokapseln nach dem Grenzflächenadditionsverfahren übliche Isocyanate enthalten und bei kontinuierlicher Arbeitsweise Polyisocyanate einsetzt, die 0,1 bis 20 Gew.-% der Umsetzungsprodukte von mindestens 2-funktionellen Isocyanaten mit einwertigen Polyethylenoxidalkoholen und für die Herstellung von Mikrokapseln nach dem Grenzflächenadditionsverfahren übliche Isocyanate enthalten.

7. Verfahren nach Anspruch 3, dadurch gekennzeichnet, daß die mindestens 2-funktionellen Isocyanate zu 0,1 bis 30 Mol-%, vorzugsweise zu 0,5 bis 10 Mol-%, durch Umsetzung mit einwertigen Polyethylenalkoholen hydrophiliert wurden.

8. Verfahren nach Ansprüchen 3 bis 6, dadurch gekennzeichnet, daß es sich bei dem einzukapselnden Material um Parfümöle, Pflanzenschutzmittel, Reaktivkleber, Pharmazeutika oder in Leukoform vorliegende Farbstoffe, bei dem hydrophoben Lösungsmittel um chloriertes Diphenyl, chloriertes Paraffin, Baumwollsamenöl, Erdnussöl, Palmöl, Trikresylphosphat, Dialkylphthalate, Dialkyladipate, Silikonöl, teilhydrierte Terphenyle, alkyliertes Diphenyl, alkyliertes Naphthalin, Diarylether, Arylalkylether, höher alkyliertes Benzol, Mischungen dieser hydrophoben Lösungsmittel und/oder Mischungen einzelner oder mehrerer dieser hydrophoben Lösungsmittel mit Kerosin, Paraffinen und/oder Isoparaffinen und bei den Polyaminen um aliphatische primäre und sekundäre Di- und/oder Polyamine handelt.

9. Verfahren nach Ansprüchen 3 bis 8, dadurch gekennzeichnet, daß in Leukoform vorliegende Farbstoffe mikroverkapselt werden, bei denen es sich um Triphenylmethanverbindungen, Diphenylmethanverbindungen, Xanthenverbindungen und/oder Benzoxazinverbindungen handelt.

10. Verfahren nach Ansprüchen 3 bis 9, dadurch gekennzeichnet, daß die wäßrige Phase 0,05 bis 5 Gew.-% Stabilisatoren enthält.

## Claims

1. Microcapsules with a polyurea wall, characterised in that the isocyanates used for their preparation are reaction products of at least bifunctional isocyanates with monohydric polyethylene oxide alcohols.

2. Microcapsules according to Claim 1, characterised in that the isocyanates used for their preparation are reaction products of isocyanates having a functionality of 3 or more with monohydric polyethylene oxide alcohols, in which the polyethylene oxide alcohol radical is bonded via a urethane group.

3. Process for the preparation of microcapsules, in which the material to be encapsulated and a polyisocyanate are dissolved in a hydrophobic solvent, this hydrophobic mixture is emulsified in water continuously or batchwise and then a polyamine is added which is capable of reacting with the isocyanate, characterised in that the polyisocyanate used consists exclusively or partially of reaction products of isocyanates having a functionality of 2 or more with monohydric polyethylene oxide alcohols.

4. Process according to Claim 3, characterised in that the polyisocyanate used has been obtained by reacting
a) a triisocyanato(cyclo)alkyl isocyanurate of the formula 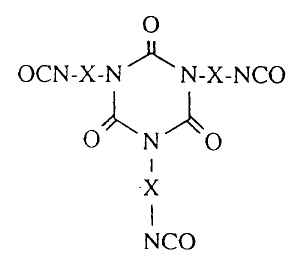 in which
X are identical or different alkylene or cycloalkylene radicals, or, if appropriate, mixtures thereof with higher homologues, or
b) polyisocyanates having biuret groups, with aliphatically bonded isocyanate groups, if appropriate mixed with higher homologues, or
c) polyisocyanurates having urethane and/or allophanate groups, with aliphatically or cyclo-aliphatically bonded isocyanate groups, and/or
d) bis-isocyanato-hexyl-oxadiazine-trione
with ethoxylation products of monovalent low-molecular substances containing active H atoms.

5. Process according to Claims 3 and 4, charac-terised in that the monohydric polyethylene oxide alcohols contain a polyether chain having at least 6 ethylene oxide units.

6. Process according to Claims 3 to 5, characterised in that in the batchwise mode of operation the polyisocyanates used contain 0.1 to 100% by weight of the reaction products of at least bifunctional isocyanates with monohydric polyethylene alcohols, and, if appropriate, isocyanates conventionally used for the preparation of microcapsules by the interfacial addition process and in the continuous mode of operation the polyisocyanates used contain 0.1 to 20% by weight of the reaction products of at least bifunctional isocyanates with monohydric polyethylene oxide alcohols and isocyanates conventionally used for the preparation of microcapsules by the interfacial addition process.

7. Process according to Claim 3, characterised in that 0.1 to 30 mol%, preferably 0.5 to 10 mol%, of the at least bifunctional isocyanates has been rendered hydrophilic by reaction with monohydric polyethylene alcohols.

8. Process according to Claims 3 to 6, characterised in that the material to be encapsulated consists of essential oils, plant protection agents, reactive adhesives, pharmaceuticals or dyes present in the leuco form, the hydrophobic solvent consists of chlorinated biphenyl, chlorinated paraffin, cotton-seed oil, groundnut oil, palm oil, tricresyl phosphate, dialkyl phthalates, dialkyl adipates, silicone oil, partially hydrogenated terphenyls, alkylated biphenyl, alkylated naphthalene, diaryl ethers, aryl alkyl ethers, relatively highly alkylated benzene, mixtures of these hydrophobic solvents and/or mixtures of one or more of these hydrophobic solvents with kerosene, paraffins and/or isoparaffins, and the polyamines consist of aliphatic primary and secondary diamines and/or polyamines.

9. Process according to Claims 3 to 8, characterised in that dyes present in the leuco form are micro-encapsulated, said dyes consisting of triphenylmethane compounds, diphenylmethane compounds, xanthene compounds and/or benzoxazine compounds.

10. Process according to Claims 3 to 9, characterised in that the aqueous phase contains 0.05 to 5% by weight of stabilisers.

## Revendications

1. Microcapsules à parois en polyurée, caractérisées en ce que, lors de leur préparation, on met en oeuvre comme isocyanates des produits réactionnels d'isocyanates au moins bifonctionnels avec des alcools monovalents d'oxyde de polyéthylène.

2. Microcapsules selon la revendication 1, caractérisées en ce que, lors de leur préparation, on met en oeuvre comme isocyanates des produits réactionnels d'isocyanates trifonctionnels ou à fonctionnalité supérieure avec des alcools monovalents d'oxyde de polyéthylène, dans lesquels le radical d'alcool d'oxyde de polyéthylène est lié via un groupe uréthane.

3. Procédé pour la préparation de microcapsules, dans lequel on dissout dans un solvant hydrophobe la matière à encapsuler et un polyisocyanate, on émulsifie ce mélange hydrophobe en continu ou en discontinu dans de l'eau et on y ajoute ensuite une polyamine apte à réagir avec l'isocyanate, caractérisé en ce que, comme polyisocyanate, on met en oeuvre de manière exclusive ou partielle des produits réactionnels d'isocyanates bifonctionnels ou à fonctionnalité supérieure avec des alcools monovalents d'oxyde de polyéthylène.

4. Procédé selon la revendication 3, caractérisé en ce qu'on met en oeuvre un polyisocyanate que l'on obtient par la mise en réaction
a) d'un triisocyanato(cyclo)alkyl-isocyanurate de formule 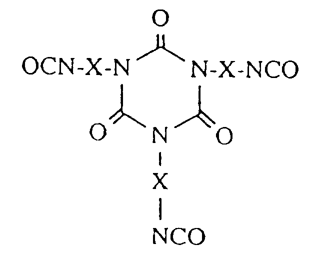 dans laquelle
X représente des radicaux alkylène ou cycloalkylène identiques ou différents, éventuellement des mélanges de ces derniers avec des homologues supérieurs, ou
b) de polyisocyanates présentant des groupes biuret, contenant des groupes isocyanate liés à des radicaux aliphatiques, éventuellement en mélange avec des homologues supérieurs, ou
c) de polyisocyanurates présentant des groupes uréthane et/ou allophanate, contenant des groupes isocyanate liés à des radicaux aliphatiques ou cycloaliphatiques, et/ou
d) la bis-isocyanato-hexyl-oxadiazine-trione
avec des produits d'éthoxylation de substances monovalentes à bas poids moléculaire contenant des atomes H actifs.

5. Procédé selon les revendications 3 et 4, caractérisé en ce que les alcools monovalents de polyoxyéthylène contiennent une chaîne polyéther contenant au moins 6 unités d'oxyde d'éthylène.

6. Procédé selon les revendications 3 à 5, caractérisé en ce qu'on met en oeuvre, dans un mode opératoire en discontinu, des polyisocyanates qui contiennent de 0,1 à 100% en poids des produits réactionnels d'isocyanates au moins bifonctionnels avec des alcools monovalents de polyéthylène, et éventuellement pour la préparation de microcapsules conformément au procédé d'addition à l'interface, des isocyanates habituels, et dans un mode opératoire en continu, on met en oeuvre des polyisocyanates qui contiennent de 0,1 à 20% en poids des produits réactionnels d'isocyanates au moins bifonctionnels avec des alcools monovalents d'oxyde de polyéthylène, et pour la préparation de microcapsules conformément au procédé d'addition à l'interface, des isocyanates habituels.

7. Procédé selon la revendication 3, caractérisé en ce que les isocyanates au moins bifonctionnels sont rendus hydrophiles à concurrence de 0,1 à 30 moles %, de préférence de 0,5 à 10 moles %, par mise en réaction avec des alcools monovalents de polyéthylène.

8. Procédé selon les revendications 3 à 6, caractérisé en ce que, en ce qui concerne la matière à encapsuler, il s'agit d'essences de parfums, d'agents de protection des plantes, d'adhésifs réactifs, de produits pharmaceutiques ou de matières colorantes présentes sous la forme leuco, dans laquelle, en ce qui concerne les solvants hydrophobes, il s'agit de diphényle chloré, de paraffine chlorée, d'huile de semences de coton, d'huile d'arachides, d'huile de palme, de tricrésylphosphate, de dialkylphtalates, de dialkyladipates, d'huile de silicone, de terphényles partiellement hydratés, de diphényles alkylés, d'alkylnaphtalènes, d'éthers diaryliques, d'éthers arylalkyliques, de benzène substitué par des groupes alkyle supérieurs, de mélanges de ces solvants hydrophobes et/ou de mélanges d'un seul ou de plusieurs de ces solvants hydrophobes avec le kérosène, des paraffines et/ou des isoparaffines, et, en ce qui concerne les polyamines, il s'agit de di- et/ou de polyamines aliphatiques primaires et secondaires.

9. Procédé selon les revendications 3 à 8, caractérisé en ce qu'on introduit dans des microcapsules des matières colorantes présentes sous la forme leuco, ces matières colorantes étant des composés de triphénylméthane, des composés de diphénylméthane, des composés de xanthène et/ou des composés de benzoxazine.

10. Procédé selon les revendications 3 à 9, caractérisé en ce que la phase aqueuse contient de 0,05 à 5% en poids de stabilisateurs.
